# EUROPEAN PATENT SPECIFICATION

(11) **EP 3 595 167 B1**
(45) Date of publication and mention of the grant of the patent: **01.12.2021**
(21) Application number: 18182814.6
(22) Date of filing: 11.07.2018
(51) Int. Cl.: H02K 19/12, H02K 19/28, H02K 11/042, H02P 29/024, H02P 9/30, H02P 25/03

(54) **CONDITION MONITORING OF EXCITERLESS SYNCHRONOUS MACHINE**
ZUSTANDSÜBERWACHUNG VON ERREGERLOSER SYNCHRONMASCHINE
SURVEILLANCE DE L'ÉTAT D'UNE MACHINE SYNCHRONE SANS EXCITATEUR

(43) Date of publication of application: 15.01.2020
(73) Proprietor: ABB Schweiz AG, 5400 Baden (CH)
(72) Inventor: RODRIGUEZ, Pedro, 722 25 Västerås (SE); PATHMANATHAN, Mehanathan, 722 15 Västerås (SE); SHRESTHA, Ghanshyam, Cary, NC 27513 (US); JANHUNEN, Tuomas, 01610 Vantaa (FI); BÄCKSTRÖM-ANDERSSON, Susanna, 00370 Helsinki (FI); PALOHEIMO, Pasi, 01620 Vantaa (FI); LIN, Chenjie, Fuquay Varina, NC 27526 (US)
(74) Representative: Kransell & Wennborg KB

(56) References cited:
- EP-A1- 3 312 988
- US-A1- 2002 053 889
- US-A1- 2015 198 655
- US-A1- 2016 211 787
- SHIBATA F ET AL: "A brushless, exciterless, single-phase, sinusoidal wave synchronous machine having an auxiliary stator winding", IEEE TRANSACTIONS ON ENERGY CONVERSION, IEEE SERVICE CENTER, PISCATAWAY, NJ, US, vol. 4, no. 2, 1 June 1989 (1989-06-01), pages 272-278, XP011479840, ISSN: 0885-8969, DOI: 10.1109/60.17922

## Description

### TECHNICAL FIELD

The present disclosure generally relates to synchronous machines and in particular to exciterless synchronous machines.

### BACKGROUND

Synchronous machine excitation systems are designed to supply the required field current to the field winding of a synchronous machine. A difficult part of the excitation process is the interface which supplies this current from a stationary source to the rotating field winding. This is usually done through carbon brushes (static excitation) or by using an exciter machine with a rotating diode or thyristor rectifier (brushless excitation).

More recently, exciterless synchronous machines using excitation coils have been developed, as for example disclosed in US2016/0211787 A1 and scientific publication "A brushless, exciterless, single-phase sinusoidal wave synchronous machine having an auxiliary stator winding" by Shibata et al, published in IEEE Power Engineering Review in June 1989. The exciterless concept uses excitation coils provided in the surface of the rotor poles. The excitation coils are positioned to harvest the magnetic energy of the slot harmonic. A power electronic converter is used to convert this harvested energy into controllable DC current which is supplied to the field winding.

One new feature of an exciterless system is that the whole excitation system, i.e. coils and power electronics, is rotating, and the coils harvest leakage flux in the air gap of the main machine. There is hence no direct control access to the excitation coils. In traditional excitation, the exciter stator winding or carbon brushes are connected to an automatic voltage regulator (AVR), which controls and protects the excitation system. Such protection via control is however not available for exciterless synchronous machines. Consequently, in this type of machines there is an increased need to take other protective actions. However, the existing solutions do not allow the right corrective action to be taken with the information available. <insert page 1a>

US 2015/198655 A1 discloses a method for a synchronous generator with a brushless exciter. The method comprises detecting a diode fault in an AC signal rectifier circuit, the AC signal rectifier circuit including a plurality of diodes, and being arranged to supply a rectified output voltage to a load. The method includes the steps of deriving an operating value indicative of the ratio of the voltage magnitudes of a first harmonic frequency and another harmonic frequency of the rectified output voltage across the load; and determining whether a fault has occurred in one or more diodes on the basis of the derived operating value. The first harmonic frequency is preferably the fundamental harmonic frequency, and/or the another harmonic frequency is preferably the 6th harmonic frequency.

US 2002/053889 discloses an exciter assembly for supplying power to a superconducting load, such as a superconducting field coil, disposed within a cryogenic region of a rotating machine.

EP 3 312 988 A1 discloses a method for detecting a fault in an AC/AC exciter comprising an exciter rotor and an exciter stator. A rotor current signal or a rotor voltage signal reflecting the current or voltage, respectively, at an exciter rotor winding, is obtained. Alternatively, or in addition, a stator current signal or a stator voltage signal reflecting the current or voltage, respectively, at an exciter stator winding, is obtained. A frequency analysis is applied on the obtained signal or signals to detect any frequency components. On the basis of a presence of a frequency component, in the case of a rotor current signal or a rotor voltage signal, at a first frequency f s ^{∗} (2-s ), where f s is a supply frequency of the exciter stator and s is an exciter slip, it is determined whether the exciter suffers from an inter-turn short circuit in an exciter stator winding or not.

### SUMMARY

In view of the above, an object of the present disclosure is to provide a method of detecting a fault condition in an excitation system of an exciterless synchronous machine which solves, or at least mitigates, the problems of the prior art.

There is hence according to a first aspect of the present disclosure provided a method of detecting a fault condition in an excitation system of an exciterless synchronous machine comprising a stator; and a rotor provided with a field winding, wherein the rotor has an excitation system including: excitation coils configured to harvest energy in a gap between the stator and the rotor, diodes forming diode rectifiers configured to rectify current from respective excitation coils to obtain a rectified current, a smoothing capacitor configured to smooth the rectified current to obtain a smoothed current, and a power converter configured to be fed with the smoothed current and to energise the field winding, wherein the method comprises: obtaining a measurement of at least one of a first electrical parameter and a second electrical parameter, measured between the diode rectifiers and the power converter, and determining whether a fault condition is present in at least one of a diode and the smoothing capacitor, wherein the determining of the fault condition in one of the diodes is based on the measurement of the first electrical parameter and/or the second electrical parameter, and wherein the determining of the fault condition of the smoothing capacitor is based on the measurement of the second electrical parameter.

It may thus be determined whether certain faults are present in any of the diodes of the diode rectifiers. Furthermore, it may be determined whether the capacitance of the smoothing capacitor(s) has degraded. Herein, capacitance degradation is also considered to represent a fault condition. As a result, the exciterless synchronous machine may be protected in the event of a diode fault or capacitor degradation.

According to one embodiment the determining involves determining whether at least one of the first electrical parameter and the second electrical parameter obtained by measurement deviates from a predetermined range of values.

According to one embodiment the determining involves analysing the spectrum of at least one of the first electrical parameter and the second electrical parameter obtained by measurement.

According to one embodiment the first electrical parameter is the rectified current.

According to one embodiment the determining involves determining whether a slot harmonic of the rectified current with a magnitude greater than a first reference value indicative of a healthy diode condition is present to detect an open diode fault, the slot harmonic being the rotational speed of the synchronous machine times the total number of stator slots.

According to one embodiment the determining involves determining whether a slot harmonic of the rectified current with a magnitude greater than a second threshold value, which is greater than the first reference value and greater than a first threshold value indicative of an open diode fault, is present to detect a diode short circuit fault.

According to one embodiment the second electrical parameter is a smoothing capacitor voltage.

According to one embodiment the determining involves determining whether a slot harmonic of the smoothing capacitor voltage with a magnitude greater than a third threshold value, which is greater than a second reference value indicative of a healthy diode condition, is present, and whether a smoothing capacitor voltage is below a smoothing capacitor voltage threshold to detect a diode short circuit fault, the slot harmonic being the rotational speed of the synchronous machine times the total number of stator slots.

According to one embodiment the determining involves determining whether a slot harmonic of the smoothing capacitor voltage with a magnitude greater than a third threshold value, which is greater than a second reference value indicative of a healthy diode condition, is present, and whether a smoothing capacitor voltage is above a smoothing capacitor voltage threshold to detect an open diode fault, the slot harmonic being the rotational speed of the synchronous machine times the total number of stator slots.

According to one embodiment the determining involves determining whether the amplitude of the smoothing capacitor voltage varies over a larger range than a healthy ripple range to detect that the smoothing capacitor has a degraded capacitance.

There is according to a second aspect of the present disclosure provided a computer program comprising computer code which when executed by processing circuitry of a monitoring system causes the monitoring system to perform the steps of the method of the first aspect.

According to a third aspect of the present disclosure there is provided a monitoring system for monitoring a condition of an excitation system of an exciterless synchronous machine comprising a stator; and a rotor provided with a field winding, wherein the rotor has an excitation system including: excitation coils configured to harvest energy in a gap between the stator and the rotor, diodes forming diode rectifiers configured to rectify current from respective excitation coils to obtain a rectified current, a smoothing capacitor configured to smooth the rectified current to obtain a smoothed current, and a power converter configured to be fed with the smoothed current and to energise the field winding, wherein the monitoring system comprises: processing circuitry, and a storage medium comprising computer code which when executed by the processing circuitry causes the monitoring system to perform the steps of the method according to the first aspect.

There is according to a fourth aspect of the present disclosure provided an exciterless synchronous machine comprising: a stator, a rotor including: a field winding, and an excitation system including: excitation coils configured to harvest energy in a gap between the stator and the rotor, diodes forming diode rectifiers configured to rectify current from respective excitation coils to obtain a rectified current, a smoothing capacitor configured to smooth the rectified current to obtain a smoothed current, a power converter configured to be fed with the smoothed current and to energise the field winding, and at least one sensor configured to measure at least one of a first electrical parameter and a second electrical parameter between the diode rectifiers and the power converter; and a monitoring system according to the third aspect.

The exciterless synchronous machine may be an exciterless synchronous motor or an exciterless synchronous generator.

According to one embodiment the monitoring system is configured to be remotely arranged with respect to the rotor.

One embodiment comprises a wireless transmitter configured to be mounted on the rotor, wherein the wireless transmitter is configured to wirelessly transmit measurements by the at least one sensor to the monitoring system.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 shows a cross-section of a portion of an example of an exciterless synchronous machine;
Fig. 2 is a schematic diagram of an example of an excitation system for an exciterless synchronous machine;
Fig. 3 is a flowchart of a method of detecting a fault condition in an excitation system of an exciterless synchronous machine;
Fig. 4a is an example of the spectrum of rectified current when all diodes are healthy, in the presence of a diode short circuit fault, and in the presence of an open diode fault;
Fig. 4b is a close-up view of a region of the spectrum in Fig. 4a which contains the slot harmonic;
Fig. 5a is an example of the spectrum of smoothing capacitor voltage when all diodes are healthy, in the presence of a diode short circuit fault, and in the presence of an open diode fault;
Fig. 5b is an example of the smoothing capacitor voltage when all diodes are healthy, in the presence of a diode short circuit fault, and an open diode fault; and
Fig. 5c is an example of a smoothing capacitor voltage when the smoothing capacitor is healthy and when the smoothing capacitor has a degraded capacitance.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

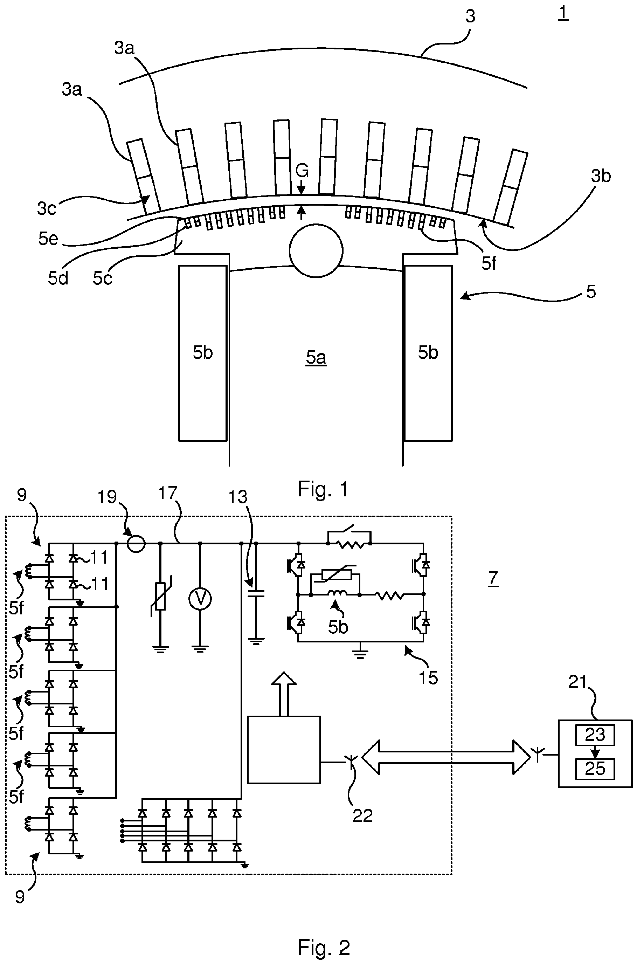

Fig. 1 shows a cross-sectional view of a portion of an example of an exciterless synchronous machine 1. The exemplified exciterless synchronous machine 1 is a rotating type of synchronous machine. The exciterless synchronous machine 1 comprises a stator 3 and a rotor 5. The stator 3 is configured to receive the rotor 5. The rotor 5 is configured to rotate relative to the stator 3.

Alternatively, the inverse configuration is also possible, where the rotor is arranged around the stator, a so-called outer rotor machine.

The stator 3 is provided with a plurality of stator slots 3a. In particular, the stator 3 has an inner perimeter surface 3b which faces the rotor 5. The inner perimeter surface 3b is provided with the stator slots 3a. The stator 3 further comprises one or more stator windings 3c arranged in the stator slots 3a.

The exemplified rotor 5 comprises a plurality of poles 5a. In Fig. 1, only one pole is shown. Any two poles arranged along the same radial axis form a pole pair. Each pole pair forms part of an electromagnet. Each pole 5a comprises a pole shoe 5c. In particular, the radially outermost portion of each pole 5a is the pole shoe 5c. Each pole shoe 5c is provided with a plurality of rotor slots 5d arranged one after the other in the tangential direction, along an external surface 5e of the pole shoe 5c. The external surface 5e faces the inner perimeter surface 3b of the stator 3. The stator 3 and the rotor 5 are separated by an air gap G.

The rotor 5 furthermore comprises excitation coils 5f, also known as energy harvesting coils. The excitation coils 5f are provided in the rotor slots 5d. For example, each pole pair may comprise a respective excitation coil 5f arranged in the corresponding rotor slots 5d of the pole shoes 5c of the pole pair. The excitation coils 5f are configured to harvest energy obtained from the slot harmonic in the magnetic field from the stator winding(s) 3c. The slot harmonic is equal to the rotational speed ω times the total number n of stator slots. The rotational speed ω is the grid frequency divided by the number of poles of the rotor 5.

The rotor 5 furthermore comprises a field winding 5b configured to electromagnetically interact with the stator winding(s) 3c. The field winding 5b is wound around the poles 5a.

With reference to Fig. 2, an example of an excitation system 7 is shown. The synchronous machine 1 comprises the excitation system 7. The excitation system 7 includes the excitation coils 5f. The excitation system 7 furthermore includes a plurality of diode rectifiers 9 arranged on the rotor 5. Each diode rectifier 9 is configured to rectify current from a respective excitation coil 5f. Each diode rectifier 9 comprises a plurality of diodes 11. The diodes 11 of each diode rectifier 9 may be arranged in a diode bridge configuration.

The number of diode rectifiers 9 may beneficially be selected so that there is redundancy in case one of the diode rectifiers breaks down, in particular if one of the diodes is subjected to an open diode failure.

The excitation system 7 furthermore comprises a busbar 17 to which all of the diode rectifiers 9 are connected in parallel with each other.

The excitation system 7 comprises a power converter 15. The power converter is a DC-DC converter. The power converter 15 is connected to the busbar 17. The power converter 15 is configured to energise the field winding 5b based on the rectified current fed by the diode rectifiers 9 to the busbar 17. The power converter 15 comprises controllable switches. By controlling the switches, the level of energisation of the field winding 5b may be controlled. The switches may for example be insulated gate bipolar transistors (IGBT). The switches may for example be arranged in an H-bridge configuration. The field winding 5b may be connected between pairs of switches which are switched concurrently.

The excitation system 7 furthermore comprises a smoothing capacitor 13. The smoothing capacitor 13 is arranged on the rotor 5. The smoothing capacitor 13 is connected to the busbar 17. The smoothing capacitor 13 is connected to the busbar between the diode rectifiers 9 and the power converter 15. The smoothing capacitor 13 is furthermore connected to ground. The smoothing capacitor 13 is configured to smooth the rectifier current obtained from the diode rectifiers 9. In this manner a smoothed current can be obtained and delivered to the power converter 15.

The excitation system 7 may include a first sensor 19 configured to detect a first electrical parameter, in particular the rectified current flowing in the busbar 17. The first sensor 19 may thereby be a current sensor, for example a DC current shunt provided by Thermovolt AB, connected in series with the busbar 17.

The excitation system 7 may comprise a second sensor (not shown) configured to detect a second electrical parameter, in particular a smoothing capacitor voltage across the smoothing capacitor 13. The second sensor may thereby be a voltage sensor.

The synchronous machine 1 furthermore comprises a monitoring system 21 configured to detect a fault condition in the excitation system 7. The monitoring system 21 is configured to receive current measurements from the current sensor and/or voltage measurements from the voltage sensor and to process these measurements to detect whether a fault condition is present in the excitation system 7 and thus in the exciterless synchronous machine 1.

The monitoring system 21 may be located remotely from the rotor in a stationary position. In this case, the rotor 5 may be provided with a wireless transmitter 22 configured to transmit the current measurements and/or the voltage measurements to the remotely located stationary monitoring system 21. Alternatively, the monitoring system may be installed on the rotor. In this case, processed data concerning fault detection as disclosed herein may be wirelessly transmitted by the monitoring system from the rotor to a stationary base station.

The monitoring system 21 comprises a storage medium 23 comprising computer code, and processing circuitry 25. The monitoring system 21 is configured to detect whether a fault condition is present in the excitation system 7 when the computer code is executed by the processing circuitry 25, as will be described in more detail in the following.

The processing circuitry 25 may use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning fault detection in the excitation system 7.

The storage medium 23 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

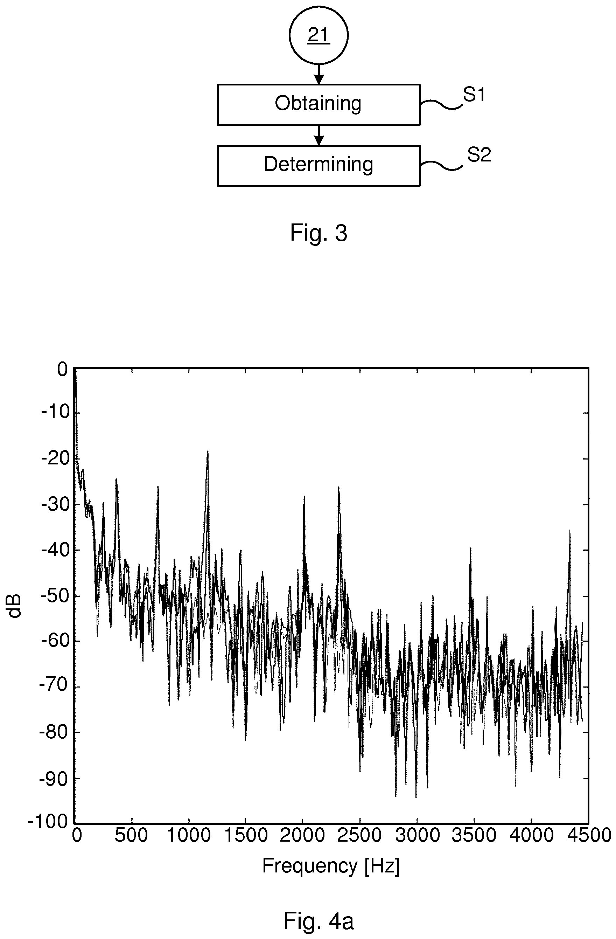

Fig. 3 is a flowchart of a method of detecting a fault condition in the excitation system 7. The method is performed by the monitoring system 21.

In a step S1 the monitoring system 21, and in particular the processing circuitry 25 obtains at least one of a current measurement made by the first sensor 19 and a voltage measurement made by the second sensor.

In a step S2, the monitoring system 21 determines whether a fault condition is present in the excitation system 7 based on at least one of the current measurement and the voltage measurement.

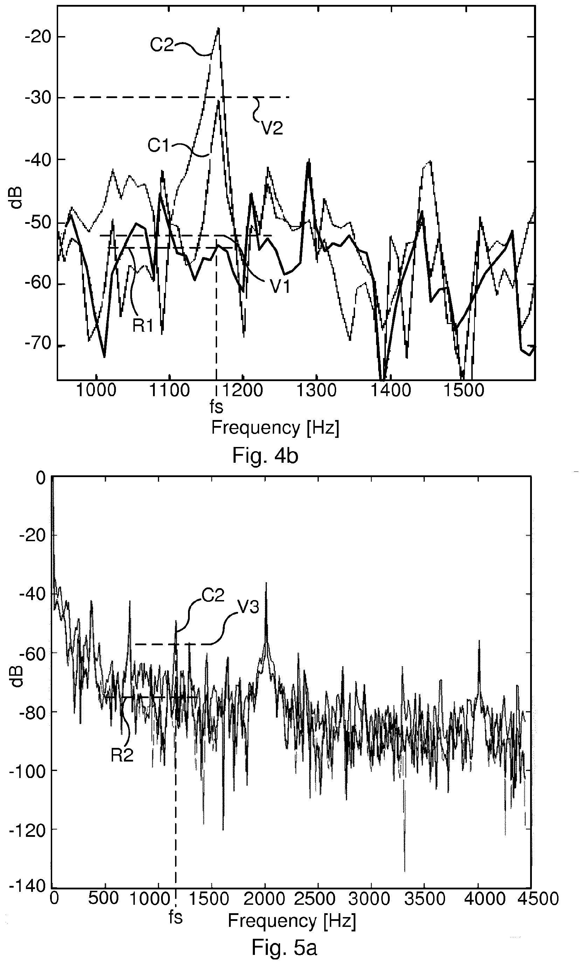

For example, as shown in Figs 4a and 4b, in case a current measurement is received by the monitoring system 21, in step S2 the current measurement may be transformed to the frequency domain to obtain the spectrum of the current, for example using a Fourier transform or any other suitable frequency transform. Alternatively, a filter such as a bandpass filter may be used to obtain the slot harmonic for analysis thereof, or the current measurement may be filtered by a band notch filter with the cut-off frequency at the slot harmonic with the resulting signal being subtracted from the original current measurement.

In case the slot harmonic fₛ of the rectified current has a magnitude greater than a first threshold value V1, which is larger than a first reference value Ri indicative of a healthy diode condition, but smaller than a second threshold value V2, i.e. if the slot harmonic has a magnitude within a certain predetermined range, an open diode fault in one of the diodes 11 of a diode rectifier 9 is detected, as shown by curve C1 in Fig. 4b.

In case the slot harmonic fₛ of the rectified current has a magnitude greater than the second threshold value V2, a diode short circuit fault in one of the diodes 11 of a diode rectifier 9 is detected, as shown by curve C2 in Fig. 4b.

Thus, by means of a current measurement an open diode fault and a diode short circuit fault may be detected.

In case a voltage measurement is received by the monitoring system 21, in step S2 the voltage measurement may be processed as follows to detect a fault condition in the excitation system. Also in this case, a transformation to the frequency domain may be performed as shown in Fig. 5a using e.g. a Fourier transform, or a filter may be used as described above to obtain the slot harmonic.

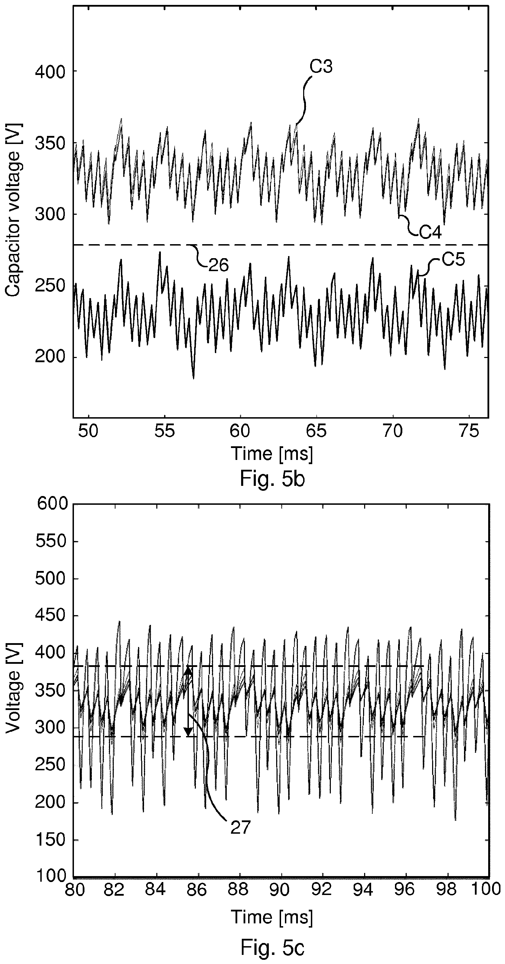

In the case of using the voltage measurement, in step S2 it is determined whether a slot harmonic of the smoothing capacitor voltage with a magnitude greater than a third threshold value V3, which is larger than a second reference value R2, is present, and whether also the smoothing capacitor voltage is below a smoothing capacitor voltage threshold 26 to detect a diode short circuit fault in one of the diodes 11 of the diode rectifiers 9. The latter situation is shown in Fig. 5b, where curves C3 and C4 show a smoothing capacitor voltage for a healthy diode and an open diode fault, respectively. Both are above the smoothing capacitor voltage threshold 26. The curve C5 shows the smoothing capacitor voltage obtained when a diode of a diode rectifier 9 has a diode short circuit fault. It can be seen that the smoothing capacitor voltage has dropped compared to the healthy diode case and the open diode fault and is much lower than in the previously mentioned two cases. In particular, it is lower than the smoothing capacitor voltage threshold 26. It is preferably the DC component of the smoothing capacitor voltage that is analysed in step S2.

If in step S2 it is determined that the slot harmonic of the smoothing capacitor voltage with a magnitude greater than the third threshold value is present and that the smoothing capacitor voltage is above the smoothing capacitor voltage threshold 26 an open diode fault of one of the diodes 11 in the diode rectifiers 9 is detected. The smoothing capacitor voltage ripple is mainly at the switching frequency of the switches of the power converter 15. The smoothing capacitor voltage ripple increases proportionally with the deterioration of the smoothing capacitor 13.

In step S2 it may also be determined whether the amplitude of the smoothing capacitor voltage varies over a larger range than a healthy ripple range 27, as shown in Fig. 5c, to detect that the smoothing capacitor has a degraded capacitance. The more the smoothing capacitor voltage varies or ripples, the more degraded the capacitance may be.

Thus, using the smoothing capacitor voltage, an open diode fault and a diode short circuit fault may be detected, however using both the slot harmonic and the smoothing capacitor voltage ripple in the time domain. Additionally, capacitor degradation may also be detected based on the ripple range of the capacitor voltage.

## Claims

1. A method of detecting a fault condition in an excitation system (7) of an exciterless synchronous machine (1) comprising a stator (3); and a rotor (5) provided with a field winding (5b), wherein the rotor (5) has an excitation system (7) including: excitation coils (5f) configured to harvest energy in a gap (G) between the stator (3) and the rotor (5), diodes (11) forming diode rectifiers (9) configured to rectify current from respective excitation coils (5f) to obtain a rectified current, a smoothing capacitor (13) configured to smooth the rectified current to obtain a smoothed current, and a power converter (15) configured to be fed with the smoothed current and to energise the field winding (5b), **characterized in that** the method comprises:
obtaining (S1) a measurement of at least one of a first electrical parameter and a second electrical parameter, measured between the diode rectifiers (9) and the power converter (15), and
determining (S2) whether a fault condition is present in at least one of a diode (11) and the smoothing capacitor (13), wherein the determining of the fault condition in one of the diodes (11) is based on the measurement of the first electrical parameter and/or the second electrical parameter, and wherein the determining of the fault condition of the smoothing capacitor (13) is based on the measurement of the second electrical parameter.

2. The method as claimed in claim 1, wherein the determining involves determining whether at least one of the first electrical parameter and the second electrical parameter obtained by measurement deviates from a predetermined range of values.

3. The method as claimed in claim 1 or 2, wherein the determining involves analysing the spectrum of at least one of the first electrical parameter and the second electrical parameter obtained by measurement.

4. The method as claimed in any of the preceding claims, wherein the first electrical parameter is the rectified current.

5. The method as claimed in claim 3 or 4, wherein the determining involves determining whether a slot harmonic (fₛ) of the rectified current with a magnitude greater than a first reference value (R1) indicative of a healthy diode condition is present to detect an open diode fault, the slot harmonic (fₛ) being the rotational speed of the synchronous machine (1) times the total number of stator slots (3a).

6. The method as claimed in claim 5, wherein the determining involves determining whether a slot harmonic (fₛ) of the rectified current with a magnitude greater than a second threshold value (V2), which is greater than the first reference value (R1) and greater than a first threshold value (V1) indicative of an open diode fault, is present to detect a diode short circuit fault.

7. The method as claimed in any of the preceding claims, wherein the second electrical parameter is a smoothing capacitor voltage.

8. The method as claimed in claim 7, wherein the determining involves determining whether a slot harmonic (fₛ) of the smoothing capacitor voltage with a magnitude greater than a third threshold value, which is greater than a second reference value (R2) indicative of a healthy diode condition, is present, and whether a smoothing capacitor voltage is below a smoothing capacitor voltage threshold (26), to detect a diode short circuit fault, the slot harmonic (fₛ) being the rotational speed of the synchronous machine (1) times the total number of stator slots (3a).

9. The method as claimed in claim 7 or 8, wherein the determining involves determining whether a slot harmonic of the smoothing capacitor voltage with a magnitude greater than a third threshold value, which is greater than a second reference value (R2) indicative of a healthy diode condition, is present, and whether a smoothing capacitor voltage is above a smoothing capacitor voltage threshold (26), to detect an open diode fault, the slot harmonic (fₛ) being the rotational speed of the synchronous machine (1) times the total number of stator slots (3a).

10. The method as claimed in any of claims 7-9, wherein the determining involves determining whether the amplitude of the smoothing capacitor voltage varies over a larger range than a healthy ripple range (27) to detect that the smoothing capacitor (13) has a degraded capacitance.

11. A computer program comprising computer code which when executed by processing circuitry (25) of a monitoring system (21) causes the monitoring system (21) to perform the steps of the method of any of claims 1-10.

12. A monitoring system (21) for detecting a fault condition in an excitation system (7) of an exciterless synchronous machine (1) comprising a stator (3); and a rotor (5) provided with a field winding (5b), wherein the rotor (5) has an excitation system (7) including: excitation coils (5f) configured to harvest energy in a gap (G) between the stator (3) and the rotor (5), diodes (11) forming diode rectifiers (9) configured to rectify current from respective excitation coils (5f) to obtain a rectified current, a smoothing capacitor (13) configured to smooth the rectified current to obtain a smoothed current, and a power converter (15) configured to be fed with the smoothed current and to energise the field winding (5b), **characterized in that** the monitoring system (21) comprises:
processing circuitry (25), and
a storage medium (23) comprising computer code which when executed by the processing circuitry (25) causes the monitoring system (21) to perform the steps of the method as claimed in any of claims 1-10.

13. An exciterless synchronous machine comprising:
a stator (3),
a rotor (3) including:
a field winding (5b), and
an excitation system (7) including:
excitation coils (5f) configured to harvest energy in a gap (G) between the stator (3) and the rotor (5),
diodes (11) forming diode rectifiers (9) configured to rectify current from respective excitation coils (5g) to obtain a rectified current,
a smoothing capacitor (13) configured to smooth the rectified current to obtain a smoothed current,
a power converter (15) configured to be fed with the smoothed current and to energise the field winding (5b), and
at least one sensor (19) configured to measure at least one of a first electrical parameter and a second electrical parameter between the diode rectifiers (9) and the power converter (15); and
a monitoring system (21) as claimed in claim 12.

14. The exciterless synchronous machine (1) as claimed in claim 13, wherein the monitoring system (21) is configured to be remotely arranged with respect to the rotor (5).

15. The exciterless synchronous machine (1) as claimed in claim 14, comprising a wireless transmitter (22) configured to be mounted on the rotor (5), wherein the wireless transmitter (22) is configured to wirelessly transmit measurements by the at least one sensor (19) to the monitoring system (21).

## Patentansprüche

1. Verfahren zum Detektieren eines Fehlerzustands in einem Erregungssystem (7) einer erregerlosen Synchronmaschine (1), umfassend einen Stator (3); und einen Rotor (5), bereitgestellt mit einer Feldwicklung (5b), wobei der Rotor (5) ein Erregungssystem (7) aufweist, das Folgendes umfasst: Erregungsspulen (5f), ausgelegt zum Ernten von Energie in einem Spalt (G) zwischen dem Stator (3) und dem Rotor (5), Dioden (11), die Diodengleichrichter (9) bilden, ausgelegt zum Gleichrichten von Strom von entsprechenden Erregerspulen (5f) zum Erhalten eines gleichgerichteten Stroms, einen Glättungskondensator (13), ausgelegt zum Glätten des gleichgerichteten Stroms zum Erhalten eines geglätteten Stroms, und einen Leistungsumrichter (15), dazu ausgelegt, mit dem geglätteten Strom gespeist zu werden und die Feldwicklung (5b) zu erregen, **dadurch gekennzeichnet, dass** das Verfahren Folgendes umfasst:
Erhalten (S1) einer Messung von zumindest einem aus einem ersten elektrischen Parameter und einem zweiten elektrischen Parameter, gemessen zwischen den Diodengleichrichtern (9) und dem Leistungsumrichter (15), und
Bestimmen (S2), ob ein Fehlerzustand in zumindest einem aus einer Diode (11) und einem Glättungskondensator (13) vorhanden ist, wobei das Bestimmen des Fehlerzustands in einer der Dioden (11) auf der Messung des ersten elektrischen Parameters und/oder des zweiten elektrischen Parameters basiert und wobei das Bestimmen des Fehlerzustands des Glättungskondensators (13) auf der Messung des zweiten elektrischen Parameters basiert.

2. Verfahren nach Anspruch 1, wobei das Bestimmen beinhaltet zu bestimmen, ob zumindest einer aus dem ersten elektrischen Parameter und dem zweiten elektrischen Parameter, die durch die Messung erhalten wurden, von einem vorbestimmten Bereich von Werten abweicht.

3. Verfahren nach Anspruch 1 oder 2, wobei das Bestimmen beinhaltet, das Spektrum von zumindest einem aus dem ersten elektrischen Parameter und dem zweiten elektrischen Parameter, die durch Messung erhalten wurden, zu analysieren.

4. Verfahren nach einem der vorhergehenden Ansprüche, wobei der erste elektrische Parameter der gleichgerichtete Strom ist.

5. Verfahren nach Anspruch 3 oder 4, wobei das Bestimmen beinhaltet zu bestimmen, ob eine Nutenharmonische (fₛ) des gleichgerichteten Stroms mit einer Größe, die größer als ein erster Referenzwert (R1) ist, der indikativ für einen intakten Diodenzustand ist, vorhanden ist, um einen Diodenunterbrechungsfehler zu detektieren, wobei die Nutenharmonische (fₛ) die Drehzahl der Synchronmaschine (1) multipliziert mit der Gesamtanzahl von Statornuten (3a) ist.

6. Verfahren nach Anspruch 5, wobei das Bestimmen beinhaltet zu bestimmen, ob eine Nutenharmonische (fₛ) des gleichgerichteten Stroms mit einer Größe größer als ein zweiter Schwellenwert (V2), der größer als der erste Referenzwert (R1) und größer als ein erster Schwellenwert (V1) ist, der indikativ für einen Diodenunterbrechungsfehler ist, vorhanden ist, um einen Diodenkurzschlussfehler zu detektieren.

7. Verfahren nach einem der vorhergehenden Ansprüche, wobei der zweite elektrische Parameter eine Glättungskondensatorspannung ist.

8. Verfahren nach Anspruch 7, wobei das Bestimmen beinhaltet zu bestimmen, ob eine Nutenharmonische (fₛ) der Glättungskondensatorspannung mit einer Größe größer als ein dritter Schwellenwert, der größer als ein zweiter Referenzwert (R2) ist, der indikativ für einen intakten Diodenzustand ist, vorhanden ist, und ob eine Glättungskondensatorspannung unter einer Glättungskondensatorspannungsschwelle (26) ist, um einen Diodenkurzschlussfehler zu detektieren, wobei die Nutenharmonische (fₛ) die Drehzahl der Synchronmaschine (1) multipliziert mit der Gesamtanzahl von Statornuten (3a) ist.

9. Verfahren nach Anspruch 7 oder 8, wobei das Bestimmen beinhaltet zu bestimmen, ob eine Nutenharmonische der Glättungskondensatorspannung mit einer Größe größer als ein dritter Schwellenwert, der größer als ein zweiter Referenzwert (R2) ist, der indikativ für einen intakten Diodenzustand ist, vorhanden ist, und ob eine Glättungskondensatorspannung über einer Glättungskondensatorspannungsschwelle (26) ist, um einen Diodenunterbrechungsfehler zu detektieren, wobei die Nutenharmonische (fₛ) die Drehzahl der Synchronmaschine (1) multipliziert mit der Gesamtanzahl von Statornuten (3a) ist.

10. Verfahren nach einem der Ansprüche 7-9, wobei das Bestimmen beinhaltet zu bestimmen, ob die Amplitude der Glättungskondensatorspannung über einem größeren Bereich als einem gesunden Welligkeitsbereich (27) variiert, um zu detektieren, dass der Glättungskondensator (13) eine verminderte Kapazität aufweist.

11. Computerprogramm, umfassend Computercode, der, wenn durch eine Verarbeitungsschaltungsanordnung (25) eines Überwachungssystems (21) ausgeführt, das Überwachungssystem (21) veranlasst, die Schritte des Verfahrens nach einem der Ansprüche 1-10 durchzuführen.

12. Überwachungssystem (21) zum Detektieren eines Fehlerzustands in einem Erregungssystem (7) einer erregerlosen Synchronmaschine (1), umfassend einen Stator (3); und einen Rotor (5), bereitgestellt mit einer Feldwicklung (5b), wobei der Rotor (5) ein Erregungssystem (7) aufweist, das Folgendes umfasst: Erregungsspulen (5f), ausgelegt zum Ernten von Energie in einem Spalt (G) zwischen dem Stator (3) und dem Rotor (5), Dioden (11), die Diodengleichrichter (9) bilden, ausgelegt zum Gleichrichten von Strom von entsprechenden Erregerspulen (5f) zum Erhalten eines gleichgerichteten Stroms, einen Glättungskondensator (13), ausgelegt zum Glätten des gleichgerichteten Stroms zum Erhalten eines geglätteten Stroms, und einen Leistungsumrichter (15), dazu ausgelegt, mit dem geglätteten Strom gespeist zu werden und die Feldwicklung (5b) zu erregen, **dadurch gekennzeichnet, dass** das Überwachungssystem (21) Folgendes umfasst:
eine Verarbeitungsschaltungsanordnung (25); und
ein Speichermedium (23), umfassend Computercode, der, wenn durch die Verarbeitungsschaltungsanordnung (25) ausgeführt, das Überwachungssystem (21) veranlasst, die Schritte des Verfahrens nach einem der Ansprüche 1-10 durchzuführen.

13. Erregerlose Synchronmaschine, die Folgendes umfasst:
einen Stator (3),
einen Rotor (3), der Folgendes umfasst:
eine Feldwicklung (5b), und
ein Erregungssystem (7), das Folgendes umfasst:
Erregerspulen (5f), ausgelegt zum Ernten von Energie in einem Spalt (G) zwischen dem Stator (3) und dem Rotor (5),
Dioden (11), die Diodengleichrichter (9) bilden, ausgelegt zum Gleichrichten von Strom von entsprechenden Erregerspulen (5g) zum Erhalten eines gleichgerichteten Stroms,
einen Glättungskondensator (13), ausgelegt zum Glätten des gleichgerichteten Stroms zum Erhalten eines geglätteten Stroms,
einen Leistungsumrichter (15), dazu ausgelegt, mit dem geglätteten Strom gespeist zu werden und die Feldwicklung (5b) zu erregen, und
zumindest einen Sensor (19), ausgelegt zum Messen von zumindest einem aus einem ersten elektrischen Parameter und einem zweiten elektrischen Parameter zwischen den Diodengleichrichtern (9) und dem Leistungsumrichter (15); und
ein Überwachungssystem (21) nach Anspruch 12.

14. Erregerlose Synchronmaschine (1) nach Anspruch 13, wobei das Überwachungssystem (21) dazu ausgelegt ist, entfernt bezüglich des Rotors (5) angeordnet zu sein.

15. Erregerlose Synchronmaschine (1) nach Anspruch 14, umfassend einen kabellosen Sender (22), dazu ausgelegt, am Rotor (5) montiert zu werden, wobei der kabellose Sender (22) dazu ausgelegt ist, Messungen durch den zumindest einen Sensor (19) kabellos an das Überwachungssystem (21) zu senden.

## Revendications

1. Procédé pour détecter un état de défaillance dans un système d'excitation (7) d'une machine synchrone sans excitateur (1) comprenant un stator (3) ; et un rotor (5) pourvu d'un enroulement inducteur (5b), dans lequel le rotor (5) a un système d'excitation (7) incluant : des bobines d'excitation (5f) configurées pour collecter de l'énergie dans un espacement (G) entre le stator (3) et le rotor (5), des diodes (11) formant des redresseurs à diodes (9) configurées pour redresser du courant provenant de bobines d'excitation (5f) respectives pour obtenir un courant redressé, un condensateur de lissage (13) configuré pour lisser le courant redressé pour obtenir un courant lissé, et un convertisseur de puissance (15) configuré pour être alimenté avec le courant lissé et pour exciter l'enroulement inducteur (5b), **caractérisé en ce que** le procédé comprend :
l'obtention (S1) d'une mesure d'au moins l'un d'un premier paramètre électrique et d'un deuxième paramètre électrique, mesurés entre les redresseurs à diodes (9) et le convertisseur de puissance (15), et
la détermination (S2) de la présence ou non d'un état de défaillance dans au moins l'un d'une diode (11) et du condensateur de lissage (13), dans lequel la détermination de l'état de défaillance dans l'une des diodes (11) est basée sur la mesure du premier paramètre électrique et/ou du deuxième paramètre électrique, et dans lequel la détermination de l'état de défaillance du condensateur de lissage (13) est basée sur la mesure du deuxième paramètre électrique.

2. Procédé selon la revendication 1, dans lequel la détermination consiste à déterminer si au moins l'un du premier paramètre électrique et du deuxième paramètre électrique obtenus par mesure dévie d'une plage de valeurs prédéterminée.

3. Procédé selon la revendication 1 ou 2, dans lequel la détermination implique l'analyse du spectre d'au moins l'un du premier paramètre électrique et du deuxième paramètre électrique obtenus par mesure.

4. Procédé selon l'une quelconque des revendications précédentes, dans lequel le premier paramètre électrique est le courant redressé.

5. Procédé selon la revendication 3 ou 4, dans lequel la détermination consiste à déterminer si une harmonique d'encoche (fₛ) du courant redressé avec une amplitude supérieure à une première valeur de référence (R1) indiquant un état de diode saine est présente pour détecter une défaillance de diode ouverte, l'harmonique d'encoche (fₛ) étant la vitesse de rotation de la machine synchrone (1) fois le nombre total d'encoches de stator (3a).

6. Procédé selon la revendication 5, dans lequel la détermination consiste à déterminer si une harmonique d'encoche (fₛ) du courant redressé avec une amplitude supérieure à une deuxième valeur de seuil (V2), qui est supérieure à la première valeur de référence (R1) et supérieure à une première valeur de seuil (V1) indiquant une défaillance de diode ouverte, est présente pour détecter une défaillance de court-circuit de diode.

7. Procédé selon l'une quelconque des revendications précédentes, dans lequel le deuxième paramètre électrique est une tension de condensateur de lissage.

8. Procédé selon la revendication 7, dans lequel la détermination consiste à déterminer si une harmonique d'encoche (fₛ) de la tension de condensateur de lissage avec une amplitude supérieure à une troisième valeur de seuil, qui est supérieure à une deuxième valeur de référence (R2) indiquant un état de diode saine, est présente, et si une tension de condensateur de lissage est inférieure à un seuil de tension de condensateur de lissage (26), pour détecter une défaillance de court-circuit de diode, l'harmonique d'encoche (fₛ) étant la vitesse de rotation de la machine synchrone (1) fois le nombre total d'encoches de stator (3a).

9. Procédé selon la revendication 7 ou 8, dans lequel la détermination consiste à déterminer si une harmonique d'encoche de la tension de condensateur de lissage avec une amplitude supérieure à une troisième valeur de seuil, qui est supérieure à une deuxième valeur de référence (R2) indiquant un état de diode saine, est présente, et si une tension de condensateur de lissage est supérieure à un seuil de tension de condensateur de lissage (26), pour détecter une défaillance de diode ouverte, l'harmonique d'encoche (fₛ) étant la vitesse de rotation de la machine synchrone (1) fois le nombre total d'encoches de stator (3a).

10. Procédé selon l'une quelconque des revendications 7 à 9, dans lequel la détermination consiste à déterminer si l'amplitude de la tension de condensateur de lissage varie sur une plage plus grande qu'une plage de fluctuation saine (27) pour détecter que le condensateur de lissage (13) a une capacité dégradée.

11. Programme informatique comprenant du code informatique qui lorsqu'il est exécuté par un circuit de traitement (25) d'un système de surveillance (21) amène le système de surveillance (21) à mettre en œuvre les étapes du procédé selon l'une quelconque des revendications 1 à 10.

12. Système de surveillance (21) pour détecter un état de défaillance dans un système d'excitation (7) d'une machine synchrone sans excitateur (1) comprenant un stator (3) ; et un rotor (5) pourvu d'un enroulement inducteur (5b), dans lequel le rotor (5) a un système d'excitation (7) incluant : des bobines d'excitation (5f) configurées pour collecter de l'énergie dans un espacement (G) entre le stator (3) et le rotor (5), des diodes (11) formant des redresseurs à diodes (9) configurées pour redresser du courant provenant de bobines d'excitation (5f) respectives pour obtenir un courant redressé, un condensateur de lissage (13) configuré pour lisser le courant redressé pour obtenir un courant lissé, et un convertisseur de puissance (15) configuré pour être alimenté avec le courant lissé et pour exciter l'enroulement inducteur (5b), **caractérisé en ce que** le système de surveillance (21) comprend :
un circuit de traitement (25), et
un support de stockage (23) comprenant du code informatique qui lorsqu'il est exécuté par le circuit de traitement (25) amène le système de surveillance (21) à mettre en œuvre les étapes du procédé selon l'une quelconque des revendications 1 à 10.

13. Machine synchrone sans excitateur comprenant :
un stator (3),
un rotor (3) incluant :
un enroulement inducteur (5b), et
un système d'excitation (7) incluant :
des bobines d'excitation (5f) configurées pour collecter de l'énergie dans un espacement (G) entre le stator (3) et le rotor (5),
des diodes (11) formant des redresseurs à diodes (9) configurées pour redresser du courant provenant de bobines d'excitation (5g) respectives pour obtenir un courant redressé,
un condensateur de lissage (13) configuré pour lisser le courant redressé pour obtenir un courant lissé,
un convertisseur de puissance (15) configuré pour être alimenté avec le courant lissé et pour exciter l'enroulement inducteur (5b), et
au moins un capteur (19) configuré pour mesurer au moins l'un d'un premier paramètre électrique et d'un deuxième paramètre électrique entre les redresseurs à diodes (9) et le convertisseur de puissance (15) ; et
un système de surveillance (21) selon la revendication 12.

14. Machine synchrone sans excitateur (1) selon la revendication 13, dans laquelle le système de surveillance (21) est configuré pour être agencé à distance par rapport au rotor (5).

15. Machine synchrone sans excitateur (1) selon la revendication 14, comprenant un émetteur sans fil (22) configuré pour être monté sur le rotor (5), dans laquelle l'émetteur sans fil (22) est configuré pour transmettre par voie sans fil des mesures réalisées par l'au moins un capteur (19) au système de surveillance (21).
